# EUROPEAN PATENT APPLICATION

(11) **EP 3 923 450 A1**
(43) Date of publication of application: **15.12.2021**
(21) Application number: 19933979.7
(22) Date of filing: 24.12.2019
(51) Int. Cl.: H02K 1/22, H02K 1/26

(54) **DIRECT-START SYNCHRONOUS RELUCTANCE ELECTRIC MOTOR ROTOR STRUCTURE, ELECTRIC MOTOR AND COMPRESSOR**

(30) Priority: 19.06.2019 CN 201910533726
(71) Applicant: Gree Electric Appliances, Inc. of Zhuhai, Zhuhai, Guangdong 519070 (CN)
(72) Inventor: SHI, Jinfei, Zhuhai, Guangdong 519070 (CN); YU, Qinhong, Zhuhai, Guangdong 519070 (CN); XIAO, Yong, Zhuhai, Guangdong 519070 (CN); CHEN, Bin, Zhuhai, Guangdong 519070 (CN); LI, Xia, Zhuhai, Guangdong 519070 (CN)
(74) Representative: Murgitroyd & Company
(86) International application number: PCT/CN2019/128073
(87) International publication number: WO 2020/253195

(57) **Abstract**

The present application provides a rotor structure of a direct-start synchronous reluctance motor, a motor and a compressor. The rotor structure of the direct-start synchronous reluctance motor includes a rotor iron core, a q-axis squirrel-cage slot is provided near an outer edge of the rotor iron core, and a plurality of slit slots are arranged between the q-axis squirrel-cage slot and a shaft hole of the rotor iron core, both ends of each slit slot are provided with a squirrel-cage slot, a side wall of the squirrel-cage slot on one side of a d-axis and the d-axis are arranged at a first included angle, and an angle of the first included angle is gradually increased outwards along a radial direction of the rotor iron core. By means of the above arrangement, q-axis reluctance is increased, q-axis inductance is reduced, a difference between the magnetic fluxes of the d-axis and the q-axis is increased, a larger reluctance torque is generated, and output and efficiency of the motor are increased.

## Description

### TECHNICAL FIELD

The present application relates to the field of compressor device, and in particular to a rotor structure of a direct-start synchronous reluctance motor, a motor and a compressor. The present application claims priority to Chinese patent application No.201910533726.4, filed on June 19, 2019, entitled "ROTOR STRUCTURE OF DIRECT-START SYNCHRONOUS RELUCTANCE MOTOR, MOTOR AND COMPRESSOR".

### BACKGROUND

Asynchronous start synchronous reluctance motor combines structural characteristics of an induction motor and a reluctance motor, a start is achieved through a torque generated by a squirrel-cage induction, and a constant speed operation is achieved through a reluctance torque generated by a rotor inductance gap, and a starting operation can be achieved by directly turning on a power supply. Compared with an asynchronous start permanent magnet motor, an asynchronous start synchronous reluctance motor does not contain rare earth permanent magnet materials and does not involve a demagnetization problem, so that the motor has low cost and good reliability.

In the prior art, the patent with a patent publication number CN1255925C provides a cheap and easy-to-start synchronous inductance motor, a manufacturing device and a manufacturing method thereof, in which a rotor is provided with at least one pair of slit portions of a two-pole magnetic pole protrusions a 90-degree angle formed by d-axis of an easy-to-pass direction of the magnetic flux and q-axis of a difficult-to-pass direction of the magnetic flux, a plurality of slot portions are arranged on an outer circumference of the slit portions, and conductive material is filled in the slit portions and the slot portions. The slit portions are formed in a linear shape, and the slot portions are arranged radially at equal intervals in a circumferential direction. Since the slot portions are arranged radially at equal intervals, a magnetic flux direction between the slot portions is perpendicular to the rotor surface to flow radially, and the slot portions obstruct the flow of the magnetic flux in a d-axis direction, especially the closer slot portions to q-axis, the more obvious the obstruction of a d-axis magnetic flux, and the smoother the flow of a q-axis magnetic flux, so a difference between magnetic fluxes of d-axis and q-axis is not obvious, saliency ratio is not large, and output and efficiency of the motor are not enough.

The patent with the patent publication number CN1726629A provides a direct-start reluctance motor rotor, which reduces production time and cost. However, it also has the same problem as the technical solution disclosed in CN1255925C, that is, the slot portions obstruct the flow of magnetic flux in d-axis direction, and the shape and position of cast aluminum slot (slot portions) on the outer circumference of the rotor affects the flow of magnetic flux and the efficiency of the motor.

### SUMMARY

The main purpose of the present application is to provide a rotor structure of a direct-start synchronous reluctance motor, a motor and a compressor to solve the problem of low motor efficiency in the prior art.

In order to achieve the above purpose, according to one aspect of the present application, a rotor structure of a direct-start synchronous reluctance motor is provided, which includes: a rotor iron core, a q-axis squirrel-cage slot is arranged near an outer edge of the rotor iron core, and a plurality of slit slots are arranged between the q-axis squirrel-cage slot and a shaft hole of the rotor iron core, both ends of each slit slot are provided with a squirrel-cage slot, a side wall of the squirrel-cage slot on one side of a d-axis and the d-axis are arranged at a first included angle, and an angle of the first included angle is gradually increased outwards along a radial direction of the rotor iron core.

Further, there are a plurality of q-axis squirrel-cage slots, and a first reinforcing rib is provided between two adjacent q-axis squirrel-cage slots, the plurality of q-axis squirrel-cage slots are configured to fill conductive non-magnetic material.

Further, the plurality of q-axis squirrel-cage slots are symmetrically arranged with respect to a q-axis of the rotor iron core.

Further, the plurality of q-axis squirrel-cage slots include: a first q-axis squirrel-cage slot, a first end of the first q-axis squirrel-cage slot is arranged near the q-axis, and a second end of the first q-axis squirrel-cage slot is away from the q-axis and gradually close to the d-axis of the rotor iron core; a second q-axis squirrel-cage slot, a first end of the second squirrel-cage slot is arranged near the q-axis and is arranged at a distance from the first end of the first q-axis squirrel-cage slot, so that the first reinforcing rib is formed between the first end of the second q-axis squirrel-cage slot and the first end of the first q-axis squirrel-cage slot, and a second end of the first q-axis squirrel-cage slot is away from the q-axis and gradually close to the d-axis of the rotor iron core, and the q-axis passes through a geometric center-line in a length direction of the first reinforcing rib, and the first q-axis squirrel-cage slot and the second q-axis squirrel-cage slot are symmetrically arranged with respect to the q-axis.

Further, an included angle between connecting lines which are formed from an end of the second end of the first q-axis squirrel-cage slot and an end of the second end of the second q-axis squirrel-cage slot to the hole center of the shaft hole of the rotor iron core is θ, θ≥0.25*180/p, and p is the number of pole pairs of the motor rotor.

Further, a first end of the squirrel-cage slot is arranged adjacent to the slit slot, and a second end of the squirrel-cage slot extends outwards along a radial direction of the rotor iron core and gradually close to the d-axis of the rotor iron core.

Further, the slit slot is filled with a non-conductive non-magnetic material, or the slit slot is filled with air.

Further, the q-axis squirrel-cage slot and the squirrel-cage slot are filled with a conductive non-magnetic material, and the conductive non-magnetic material is aluminum or aluminum alloy.

Further, a material filled in the squirrel-cage slots is short-circuited by conductive end ring located at both ends of the rotor iron core, and the material of the conductive end ring is the same as the material filled in the squirrel-cage slots.

Further, a width of a magnetic conductive channel formed between two adjacent slit slots is gradually reduced in a direction away from a q-axis.

Further, there are a plurality of squirrel-cage slots, and the plurality of squirrel-cage slots are arranged at intervals along a circumferential direction of the rotor iron core, and the distances from ends of the plurality of squirrel-cage slots to the outer edge of the rotor iron core are equal.

Further, distances from ends of the slit slots to the squirrel-cage slots are equal.

Further, each slit slot is provided with a second reinforcing rib, and a width of the first reinforcing rib is the same as a width of the second reinforcing rib.

Further, the first reinforcing rib and the second reinforcing rib are located on a q-axis.

Further, a first end of the squirrel-cage slot is connected with the slit slot, and a second end of the squirrel-cage slot extends outwards along a radial direction of the rotor iron core and gradually close to the d-axis of the rotor iron core.

Further, side walls of the squirrel-cage slots on a side of the d-axis and the d-axis are arranged at second included angles, and the second included angles are gradually increased outwards along a radial direction of the rotor iron core.

According to another aspect of the present application, a motor is provided, which includes a rotor structure of a direct-start synchronous reluctance motor, wherein the rotor structure of the direct-start synchronous reluctance motor is the rotor structure of the direct-start synchronous reluctance motor mentioned above.

According to another aspect of the present application, a compressor is provided, which includes a rotor structure of a direct-start synchronous reluctance motor, wherein the rotor structure of the direct-start synchronous reluctance motor is the rotor structure of the direct-start synchronous reluctance motor mentioned above.

In the technical solution of the present application, a q-axis squirrel-cage slot is arranged at a q-axis on a magnetic pole of a rotor iron core, and the side wall of the squirrel-cage slot on one side of the d-axis and the d-axis are arranged at a first included angle, so that such a setting can achieve starting by filling in conductive non-magnetic material to generate an induction torque and dragging it into synchronization, and achieve a synchronous and stable operation through a magnetic reluctance torque generated by a magnetic barrier effect on the rotor iron core. The technical solution can increase q-axis reluctance, reduce q-axis inductance, increase a difference between magnetic fluxes of d-axis and q-axis, generate a greater reluctance torque, and increase output and efficiency of the motor.

### BRIEF DESCRIPTION OF DRAWINGS

The accompanying drawings of the specification forming a part of the present application are used to provide a further understanding for the present application, and the exemplary embodiments and descriptions of the present application are used to explain the present application, and do not constitute an improper limitation of the present application. In the accompanying drawings:
FIG. 1 is a schematic structural diagram of a rotor structure of a direct-start synchronous reluctance motor according to a first embodiment of the present application.
FIG. 2 is a schematic structural diagram of a rotor structure of a direct-start synchronous reluctance motor according to a second embodiment of the present application.
FIG. 3 is a schematic diagram of a comparison of motor output ratio according to the motor in the present application and the motor in the prior art.

The above accompanying drawings includes following reference numerals:
10, rotor iron core; 11, first reinforcing rib; 12, first q-axis squirrel-cage slot; 13, second q-axis squirrel-cage slot; 14, shaft hole;
20, slit slot;
30, squirrel-cage slot;
40, second reinforcing rib.

### DETAILED DESCRIPTION OF THE EMBODIMENTS

It should be noted that the embodiments in the present application and the features in the embodiments can be combined with each other in the absence of conflict. The present application will be described in detail below with reference to the accompanying drawings and in conjunction with the embodiments.

It should be noted that the terms used here are only for describing specific embodiments, and are not intended to limit the exemplary embodiments according to the present application. As used herein, unless the context clearly indicates otherwise, the singular form is also intended to include the plural form. In addition, it should also be understood that when the terms "comprising" and/or "including" are used in this specification, they indicate existence of features, steps, operations, devices, components, and/or combinations thereof.

It should be noted that the terms "first" and "second" in the description, claims and accompanying drawings of the present application are used to distinguish similar objects, and are not necessarily used to describe a specific sequence or precedence order. It should be understood that the terms used in this way can be interchanged under appropriate circumstances, so that the embodiments of the present application described herein can, for example, be implemented in an order other than those illustrated or described herein. In addition, the terms "including" and "having" and any variations of them are intended to cover non-exclusive inclusions, for example, a process, method, system, product, or device that includes a series of steps or units is not necessarily limited to those clearly listed steps or units, but those may include other steps or units that are not clearly listed or are inherent to these processes, methods, products, or equipment.

For ease of description, spatial relative terms may be used here, such as "above", "upper", "on the upper surface", "over", etc., to describe the spatial positional relationship between one device or feature and other devices or features as shown in the figure. It should be understood that the spatially relative terms are intended to encompass different orientations in use or operation other than the orientation of the device described in the figure. For example, if the device in the accompanying drawing is inverted, then a device described as "above other devices or structures" or "over other devices or structures" will then be positioned as "below the other devices or structures" or "under other devices or structures". Thus, the exemplary term "above" can include both orientations "above" and "below". The device can also be positioned in other different ways (rotated by 90 degrees angle or in other orientations), and the relative description of the space used here will be explained accordingly.

Now, exemplary embodiments according to the present application will be described with more detail with reference to the accompanying drawings. However, these exemplary embodiments can be implemented in a variety of different forms, and should not be construed as being limited to the embodiments set forth herein. It should be understood that these embodiments are provided to make the disclosure of this present application thorough and complete, and to fully convey the concept of these exemplary embodiments to those of ordinary skill in the art. In the accompanying drawings, for clarity, the thicknesses of the layers and regions may be enlarged, and the same reference numerals are used to denote the same devices, so their description will be omitted.

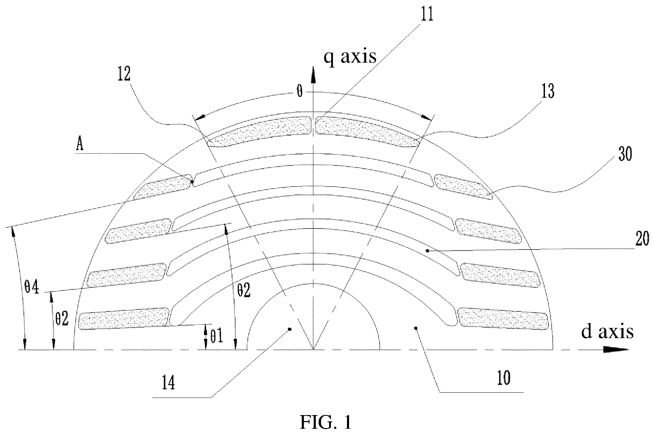

As shown in FIGS. 1 to 3, a rotor structure of a direct-start synchronous reluctance motor is provided according to an embodiment of the present application.

As shown in FIG. 1, the rotor structure includes a rotor iron core 10, q-axis squirrel-cage slots are arranged near an outer edge of the rotor iron core 10, and a plurality of slit slots 20 are arranged between the q-axis squirrel-cage slots and a shaft hole 14 of the rotor iron core 10. Both ends of each slit slot 20 are provided with a squirrel-cage slot 30, a side wall of the squirrel-cage slot 30 on one side of a d-axis and the d-axis are arranged at a first included angle, and an angle of the first included angle is gradually increased outwards along a radial direction of the rotor iron core 10.

In the embodiment, a plurality of q-axis squirrel-cage slots are arranged at the q-axis on a magnetic pole of the rotor iron core, and the side wall of the squirrel-cage slot on one side of the d-axis and the d-axis are arranged at a first included angle. Such a setting can achieve starting by filling in a conductive non-magnetic material to generate an induction torque and dragging it into synchronization, and achieve synchronous and stable operation through a magnetic reluctance torque generated by a magnetic barrier effect on the rotor iron core. The technical solution can increase q-axis reluctance, reduce q-axis inductance, increase a difference between magnetic fluxes d-axis and q-axis, generate a greater reluctance torque, and increase the motor output and efficiency.

There are a plurality of q-axis squirrel-cage slots, and a first reinforcing rib 11 is provided between two adjacent q-axis squirrel-cage slots. The plurality of q-axis squirrel-cage slots are configured to fill the conductive non-magnetic material. The plurality of q-axis squirrel-cage slots are symmetrically arranged with respect to the q-axis of the rotor iron core 10. Such a setting can further improve the stability and reliability of the rotor structure. Such a setting can achieve starting by filling in the conductive non-magnetic material to generate an induction torque and dragging it into synchronization, and achieve synchronous and stable operation through a magnetic reluctance torque generated by a magnetic barrier effect on the rotor iron core.

Preferably, as shown in FIG. 1, the plurality of q-axis squirrel-cage slots include a first q-axis squirrel-cage slot 12 and a second q-axis squirrel-cage slot 13. A first end of the first q-axis squirrel-cage slot 12 is arranged near the q-axis. A second end of the first q-axis squirrel-cage slot 12 is away from the q-axis and gradually close to the d-axis of the rotor iron core 10. A first end of the second squirrel-cage slot 13 is arranged near the q-axis and is arranged at a distance from the first end of the first q-axis squirrel-cage slot 12, so that the first reinforcing rib 11 is formed between the first end of the second q-axis squirrel-cage slot 13 and the first end of the first q-axis squirrel-cage slot 12, and a second end of the first q-axis squirrel-cage slot 12 is away from the q-axis and gradually close to the d-axis of the rotor iron core 10, and the q-axis passes through a geometric center-line in a length direction of the first reinforcing rib 11, and the first q-axis squirrel-cage slot 12 and the second q-axis squirrel-cage slot 13 are symmetrically arranged with respect to the q-axis. Such a setting can effectively improve the performance of the rotor structure.

An included angle between connecting lines which are formed from an end of the second end of the first q-axis squirrel-cage slot 12 and an end of the second end of the second q-axis squirrel-cage slot 13 to the hole center of the shaft hole 14 of the rotor iron core 10 is θ, θ≥0.25*180/p, and p is the number of pole pairs of the motor rotor. The plurality of slit slots 20 are arranged between the q-axis squirrel-cage slots and the shaft hole 14 of the rotor iron core 10, both ends of each slit slot 20 are provided with a squirrel-cage slot 30. A first end of the squirrel-cage slot 30 is arranged adjacent to the slit slots 20, that is, the first end of the squirrel-cage slot 30 is arranged at a distance from the slit slot 20 to form a reinforcing rib structure. A second end of the squirrel-cage slot 30 extends outwards along a radial direction of the rotor iron core 10 and gradually close to the d-axis of the rotor iron core 10. Such a setting can effectively improve the efficiency of a motor with the rotor structure.

Further, a side wall of the squirrel-cage slot 30 on one side of a d-axis and the d-axis are arranged at a first included angle, and an angle of the first included angle is gradually increased outwards along a radial direction of the rotor iron core 10. As shown in FIG. 1, the rotor iron core has two stages, the two-stage magnetic poles are arranged symmetrically with respect to the d-axis, and the side wall of the squirrel-cage slot 30 on a side of the d-axis in each magnetic pole and the d-axis are arranged at a first included angle, which can improve the performance of the rotor structure. As shown in FIG. 1, there are four slit slots 20, each of the four slit slots 20 and the squirrel-cage slots 30 at both ends form a magnetic barrier layer respectively. The angles formed by the squirrel-cage slots of four magnetic barrier layers outwards along the radial direction with the d-axis are θ1, θ2, θ3, θ4, respectively, and θ1<θ2<θ3<θ4.

The slit slot 20 is filled with a non-conductive non-magnetic material, or the slit slot 20 is filled with air, that is, the slit slot is air slot.

Further, the q-axis squirrel-cage slot and the squirrel-cage slot 30 are filled with a conductive non-magnetic material 20, and the conductive non-magnetic material 20 is aluminum or aluminum alloy. Such a setting can effectively improve the performance of the rotor structure. The material filled in the squirrel-cage slot 30 is short-circuited by conductive end ring located at both ends of the rotor iron core 10, and the material of the conductive end ring is the same as the material filled in the squirrel-cage slot 30.

A width of a magnetic conductive channel formed between adjacent two slit slots 20 is gradually reduced in a direction away from the q-axis. That is, as shown in FIG. 1, a width of the magnetic conductive channel located on both sides of the q-axis is smaller than a width of the magnetic conductive channel near the middle of the q-axis.

There are a plurality of squirrel cage slots 30, and the plurality of squirrel-cage slots 30 are arranged at intervals along a circumferential direction of the rotor iron core 10. Distances from ends of the plurality of squirrel-cage slots 30 to the outer edge of the rotor iron core 10 are equal. Distances from ends of the slit slots 20 to the squirrel-cage slot 30 are equal. Such a setting can improve the stability of the rotor structure.

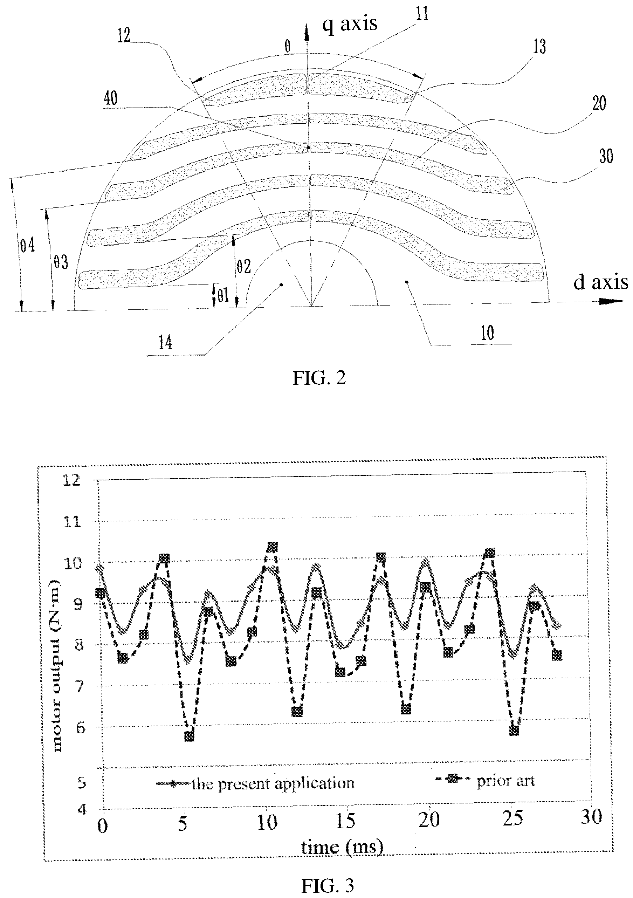

As shown in FIG. 2, according to another embodiment of the present application, each slit slot 20 is provided with a second reinforcing rib 40, and a width of the first reinforcing rib 11 is the same as a width of the second reinforcing rib 40. Such a setting can improve the strength of the rotor structure. The first reinforcing rib 11 and the second reinforcing rib 40 are located on the q-axis.

A first end of the squirrel-cage slot 30 is connected with the slit slot 20, and a second end of the squirrel-cage slot 30 extends outwards along a radial direction of the rotor iron core 10 and gradually close to the d-axis of the rotor iron core 10. Such a setting can also improve the stability and reliability of the rotor structure.

The side wall of the squirrel-cage slot 30 on a side of the d-axis and the d-axis are arranged at a second included angle, and an angle of the second included angle is gradually increased outwards along a radial direction of the rotor iron core 10. As shown in FIG. 2, the setting of the second included angle can be the same as the setting of the first included angle described above.

The rotor structure of the direct-start synchronous reluctance motor in the above-embodiment can also be used in the technical field of motor device. That is, according to another aspect of the present application, a motor is provided, which includes a rotor structure of a direct-start synchronous reluctance motor. The rotor structure of the direct-start synchronous reluctance motor is the rotor structure of the direct-start synchronous reluctance motor mentioned above.

The rotor structure of the direct-start synchronous reluctance motor in the above-mentioned embodiment can also be used in the technical field of electric vehicle device. That is, according to another aspect of the present application, a compressor is provided, which includes a rotor structure of a direct-start synchronous reluctance motor. The rotor structure of the direct-start synchronous reluctance motor is the rotor structure of the direct-start synchronous reluctance motor mentioned above.

Specifically, a motor with the rotor structure of this structure solves the problem of low efficiency and low speed of the asynchronous motor, realizes high-efficiency and constant-speed operation, and improves the output power and efficiency of the motor. The present application provides the rotor structure of the direct-start synchronous reluctance motor, increasing the mechanical strength of the motor rotor, and improving the reliability of the motor.

As shown in FIG. 1, the rotor core is formed by laminating rotor punching sheets with a specific structure, the rotor punching sheets are provided with multiple sets of slit slots and squirrel-cage slots, as well as a shaft hole matching a rotating shaft; q-axis squirrel-cage slots are provided in the q-axis direction on the outer circumference of the rotor punching sheets, and the q-axis squirrel-cage slots are used as a part of the edge of the rotor. The q-axis squirrel-cage slots effectively increase the magnetic resistance in the q-axis direction and reduce the q-axis magnetic flux and q-axis inductance. The reinforcing rib is provided in the direction parallel to the q-axis in each group of magnetic barrier layers, which increase the mechanical strength of the rotor.

The angle occupied by a periphery width of the q-axis squirrel-cage slot is θ, the angle θ satisfies: θ≥0.25*180/p, and p is the number of pole pairs of the motor rotor. By choosing a suitable angle range, the reluctance in the q-axis direction can be increased, and the q-axis magnetic flux and q-axis inductance can be reduced, while ensuring the starting ability of the motor.

The squirrel-cage slot is inclined toward the d-axis from the inside of the rotor to the outside of the rotor, the magnetic conductive channel between the squirrel-cage slots are inclined to the d-axis, the angles between the squirrel-cage slots and the d-axis are θ1, θ2, θ3, θ4, respectively. The closer the squirrel-cage slots is to the d-axis, the smaller the angle between the squirrel-cage slot and the d-axis, that is, θ1<θ2<θ3<θ4, so that the magnetic flux is concentrated in the d-axis direction, increasing the d-axis magnetic flux, increasing the difference in magnetic flux of the motor between the d-axis and q-axis, and increasing reluctance torque of the motor. The squirrel-cage slot and the slit slot are separated and independent from each other, and the slit slot or the combination of the squirrel-cage slot and the slit slot forms a magnetic barrier layer which obstructs the flow of magnetic flux, and obstructs the d-axis axial flow of magnetic flux. The slit slot is filled with air or a non-conductive non-magnetic material, which can increase the magnetic resistance difference between the d-axis and the q-axis.

All squirrel-cage slots and the q-axis squirrel-cage slots are filled with a conductive non-magnetic material. Preferably, the conductive non-magnetic material is aluminum or aluminum alloy. When the motor is energized, the squirrel-cage slot generates asynchronous torque to help the motor start. The squirrel-cage slot and the corresponding slit slot are combined to form a magnetic barrier layer. At least two magnetic barrier layers are arranged in the radial direction of the rotor, forming a pair of poles to make the magnetic flux close to the d-axis and increase the motor output. As shown in FIG. 3, the average output of the motor in the present application is larger than that of the prior art, and the torque ripple is smaller than that of the prior art.

All the squirrel-cage slots are short-circuited by conductive end rings at both ends of the rotor. The material of end ring is the same as the material filled in the squirrel-cage slot to form a closed loop, and then asynchronous torque is generated to help the motor start when the power is turned on, and no loss occurs after the motor runs synchronously. Distances from all squirrel-cage slots on the rotor to the outer edge of the rotor are equal, and distances from all squirrel-cage slots to the slit slots on the corresponding layer are equal. A channel is formed between two adjacent slit slots, a width of the channel gradually decreases in the direction away from the q-axis axis, that is, d1>d2>d3. An arc curvature of the rotor slit slot is gradually decreased from the rotor core near the rotating shaft to the outer edge of the rotor, and the rotor space is reasonably used to make the magnetic flux distribution more reasonable. The squirrel-cage slots and the slit slots of the rotor are symmetrical with respect to the d-axis and the q-axis, which is convenient for rotor processing. Of course, as shown in FIG. 2, a reinforcing rib is not necessary between the slit slot and the squirrel-cage slot, and a reinforcing rib with the same width as the q-axis squirrel-cage slot may be provided at a symmetrical position with respect to the q-axis between slit slots in each layer.

The rotor structure of the above structure solves the problems of low efficiency and low speed of the asynchronous motor, overcomes the problems in the prior art, realizes the high-efficiency and constant-speed operation of the motor, and reduces the obstruction of the cast aluminum slot (slot portion) to the magnetic flow of the rotor d-axis in the prior art, increases the difference in magnetic flux between the d-axis and q-axis, and improves output power and efficiency of the motor. By adopting the technical solution of the present application, a reasonable configuration of the cast aluminum slot (slot portion) and the magnetic barrier (slit portion) is achieved, so that the motor has a good starting performance. Through the combined design of the cast aluminum slot and the magnetic barrier, the cast aluminum slot generates an induction torque to achieve starting and drags into synchronization, a reluctance torque generated by the magnetic barrier effect realizes synchronous and stable operation. It is necessary to ensure a reasonable design of the magnetic barrier ratio, but also to ensure that the magnetic flux channel between the magnetic barriers cannot be supersaturated and hinder the flow of magnetic flux, effectively make useful of the rotor space, and increase the difference in magnetic flux between the d-axis and q-axis as much as possible. By the design of the long arc-shaped q-axis squirrel-cage slot of the q-axis, the q-axis reluctance is further increased, the q-axis inductance is reduced, the difference between the magnetic fluxes of the d-axis and q-axis is increased, greater reluctance torque is generated, and the motor output and efficiency is increased.

In addition, it should be noted that "one embodiment", "another embodiment", "embodiments" mentioned in the specification refer to that specific features, structures, or characteristics described in conjunction with the embodiment are included in at least one embodiment described generally in the present application. The occurrence of the same expression in multiple places in the specification does not necessarily refer to the same embodiment. Furthermore, when describing a specific feature, structure, or characteristic in combination with any embodiment, it is claimed that the combination of other embodiments to realize such the feature, the structure, or the characteristic also falls within the scope of the present application.

In the above-mentioned embodiments, the description of each embodiment has its own emphasis, some parts that are not described in detail in an embodiment can reference to related descriptions of other embodiments.

The foregoing descriptions are merely preferred embodiments of the present application, and are not intended to limit the present application, for those ordinary skilled in the art, the present application can have various modifications and changes. Any modifications, equivalent alterations, improvement or the like, made within the spirit and principle of the present application shall fall within in the protection scope of the present application.

## Claims

1. A rotor structure of a direct-start synchronous reluctance motor, comprising:
a rotor iron core (10), wherein a q-axis squirrel-cage slot is arranged near an outer edge of the rotor iron core (10), and a plurality of slit slots (20) are arranged between the q-axis squirrel-cage slot and a shaft hole (14) of the rotor iron core (10), both ends of each slit slot (20) are provided with a squirrel-cage slot (30), a side wall of the squirrel-cage slot (30) on one side of a d-axis and the d-axis are arranged at a first included angle, and an angle of the first included angle is gradually increased outwards along a radial direction of the rotor iron core (10).

2. The rotor structure of the direct-start synchronous reluctance motor according to claim 1, wherein there are a plurality of q-axis squirrel-cage slots, and a first reinforcing rib (11) is provided between two adjacent q-axis squirrel-cage slots, the plurality of q-axis squirrel-cage slots are configured to fill conductive non-magnetic material.

3. The rotor structure of the direct-start synchronous reluctance motor according to claim 2, wherein the plurality of q-axis squirrel-cage slots are symmetrically arranged with respect to a q-axis of the rotor iron core (10).

4. The rotor structure of the direct-start synchronous reluctance motor according to claim 3, wherein the plurality of q-axis squirrel-cage slots comprise:
a first q-axis squirrel-cage slot (12), wherein a first end of the first q-axis squirrel-cage slot (12) is arranged near the q-axis, and a second end of the first q-axis squirrel-cage slot (12) is away from the q-axis and gradually close to the d-axis of the rotor iron core (10);
a second q-axis squirrel-cage slot (13), wherein a first end of the second squirrel-cage slot (13) is arranged near the q-axis and is arranged at a distance from the first end of the first q-axis squirrel-cage slot (12), so that the first reinforcing rib (11) is formed between the first end of the second q-axis squirrel-cage slot (13) and the first end of the first q-axis squirrel-cage slot (12), and a second end of the first q-axis squirrel-cage slot (12) is away from the q-axis and gradually close to the d-axis of the rotor iron core(10), and the q-axis passes through a geometric center-line in a length direction of the first reinforcing rib (11), and the first q-axis squirrel-cage slot (12) and the second q-axis squirrel-cage slot (13) are symmetrically arranged with respect to the q-axis.

5. The rotor structure of the direct-start synchronous reluctance motor according to claim 4, wherein an included angle between connecting lines which are formed from an end of the second end of the first q-axis squirrel-cage slot (12) and an end of the second end of the second q-axis squirrel-cage slot (13) to the hole center of the shaft hole (14) of the rotor iron core (10) is θ, θ≥0.25*180/p, and p is the number of pole pairs of the motor rotor.

6. The rotor structure of the direct-start synchronous reluctance motor according to claim 1, wherein a first end of the squirrel-cage slot (30) is arranged adjacent to the slit slot (20), and a second end of the squirrel-cage slot (30) extends outwards along a radial direction of the rotor iron core (10) and gradually close to the d-axis of the rotor iron core (10).

7. The rotor structure of the direct-start synchronous reluctance motor according to claim 1, wherein the slit slot (20) is filled with a non-conductive non-magnetic material, or the slit slot (20) is filled with air.

8. The rotor structure of the direct-start synchronous reluctance motor according to claim 1, wherein the q-axis squirrel-cage slot and the squirrel-cage slot (30) are filled with a conductive non-magnetic material (20), the conductive non-magnetic material (20) is aluminum or aluminum alloy.

9. The rotor structure of the direct-start synchronous reluctance motor according to claim 1, wherein a material filled in the squirrel-cage slots (30) is short-circuited by conductive end ring located at both ends of the rotor iron core (10), and the material of the conductive end ring is the same as the material filled in the squirrel-cage slots (30).

10. The rotor structure of the direct-start synchronous reluctance motor according to claim 1, wherein a width of a magnetic conductive channel formed between two adjacent slit slots (20) is gradually reduced in a direction away from a q-axis.

11. The rotor structure of the direct-start synchronous reluctance motor according to claim 1, wherein there are a plurality of squirrel-cage slots (30), and the plurality of squirrel-cage slots (30) are arranged at intervals along a circumferential direction of the rotor iron core (10), and distances from ends of the plurality of squirrel-cage slots (30) to the outer edge of the rotor iron core (10) are equal.

12. The rotor structure of the direct-start synchronous reluctance motor according to claim 1, wherein distances from ends of the slit slots (20) to the squirrel-cage slots (30) are equal.

13. The rotor structure of the direct-start synchronous reluctance motor according to claim 1, wherein each slit slot (20) is provided with a second reinforcing rib (40), and a width of the first reinforcing rib (11) is the same as a width of the second reinforcing rib (40).

14. The rotor structure of the direct-start synchronous reluctance motor according to claim 13, wherein the first reinforcing rib (11) and the second reinforcing rib (40) are located on a q-axis.

15. The rotor structure of the direct-start synchronous reluctance motor according to claim 14, wherein a first end of the squirrel-cage slot (30) is connected with the slit slot (20), and a second end of the squirrel-cage slot (30) extends outwards along a radial direction of the rotor iron core (10) and gradually close to the d-axis of the rotor iron core (10).

16. The rotor structure of the direct-start synchronous reluctance motor according to claim 15, wherein side walls of the squirrel-cage slots (30) on a side of the d-axis and the d-axis are arranged at second included angles, and the second included angles are gradually increased outwards along a radial direction of the rotor iron core (10).

17. A motor, comprising a rotor structure of a direct-start synchronous reluctance motor, wherein the rotor structure of the direct-start synchronous reluctance motor is the rotor structure of the direct-start synchronous reluctance motor according to any one of claims 1 to 16.

18. A compressor, comprising a rotor structure of a direct-start synchronous reluctance motor, wherein the rotor structure of the direct-start synchronous reluctance motor is the rotor structure of the direct-start synchronous reluctance motor according to any one of claims 1 to 16.
